# EUROPÄISCHE PATENTSCHRIFT

(11) **EP 1 600 722 B1**
(45) Veröffentlichungstag und Bekanntmachung des Hinweises auf die Patenterteilung: **02.09.2009**
(21) Anmeldenummer: 05010942.0
(22) Anmeldetag: 20.05.2005
(51) Int. Cl.: F28F 21/08, F28F 19/06

(54) **Wärmetauscher**
Heat exchanger
Echangeur de chaleur

(30) Priorität: 25.05.2004 DE 102004025621
(43) Veröffentlichungstag der Anmeldung: 30.11.2005
(73) Patentinhaber: ROBERT BOSCH GMBH, 70442 Stuttgart (DE)
(72) Erfinder: Oehler, Heinrich, 35578 Wetzlar (DE)

(56) Entgegenhaltungen:
- EP-A- 0 166 437
- DE-A1- 3 423 628
- DE-A1- 4 002 495
- DE-A1- 10 048 930
- DE-U1- 8 905 202

## Beschreibung

Die Erfindung betrifft einen Wärmetauscher nach dem Oberbegriff des Patentanspruches 1.
Gattungsgemäße Wärmetauscher aus Grauguss oder Aluminium werden bei Heizkesseln für den Wärmeaustausch zwischen den Heizgasen und dem Kesselwasser eingesetzt. Sie bestehen aus mindestens einem Wasserkanal mit mindestens zwei begrenzenden Wänden, wobei jede Wand eine heizgasberührte sowie eine wasserberührte Wandseite aufweist.
Die DE 41 16 383 C2 zeigt beispielsweise einen Gliederheizkessel mit vertikal ausgerichteten Kesselgliedern, welche eine heizgasberührte Außenseite besitzen und einen mit dem Vorlauf- und Rücklaufanschluss verbundenen Wasserraum einschließen. Auf den heizgasberührten Seiten des Kesselgliedes sind Vorsprünge, insbesondere Rippen oder Noppen, zur Verbesserung der Wärmeübertragung angebracht.
Bei der Konstruktion von Wärmetauschern muss generell der vom eingesetzten Brennstoff abhängige Taupunkt der Heizgase beachtet werden, da die im Heizgas enthaltene Feuchtigkeit kondensiert, sobald dieser unterschritten wird. Bei so genannten Brennwert-Heizgeräten ist die Kondensation der Heizgase erwünscht, weil die latent im Abgas enthaltene Wärme genutzt werden soll. Daher wird auch meistens Edelstahl als Werkstoff für Heizgaszüge, beispielsweise in Rohr- oder Plattenform, eingesetzt. Dagegen darf bei so genannten Heizwert-Geräten der Taupunkt nur kurzzeitig unterschritten werden, so dass das Kondenswasser wieder abtrocknen kann. Ansonsten könnten dabei konstruktionsbedingt Korrosionsschäden entstehen, weil in der Regel Gusseisen oder normaler Stahl als Werkstoff verwendet werden. Vorzüge von Gusseisen sind im Wesentlichen Recyclingfähigkeit, Robustheit, relativ niedrige Kosten sowie relativ gute Gestaltungs- und Fertigungsmöglichkeiten.

Außerdem sind Wärmetauscher aus Aluminium-Silizium-Gusswerkstoffen hinreichend bekannt. Diese sind an sich gegen die Feuchtigkeit bei Taupunktunterschreitung relativ unempfindlich. Auch hierbei kann es beispielsweise durch ungünstige Betriebssituationen oder aggressive Bestandteile im eingesetzten Brennstoff zu einem verstärkten Abtrag der Aluminium-Oberflächen kommen.

Der Erfindung liegt daher die Aufgabe zugrunde, einen Wärmetauscher, insbesondere für einen mit fossilen Brennstoffen befeuerten Brennwertheizkessel, zu schaffen, welcher einerseits eine hohe Robustheit besitzt, andererseits aber auch wirtschaftlich zu fertigen ist.

Erfindungsgemäß wird dies mit den Merkmalen des Patentanspruches 1 gelöst. Vorteilhafte Weiterbildungen sind den Unteransprüchen zu entnehmen.
Der Wärmetauscher ist dadurch gekennzeichnet, dass heizgasberührte Flächen und/oder Teile eine Oberflächenschicht aus Reinstaluminium oder Edelstahl aufweisen, welche mit dem aus einem herkömmlichen Aluminium-Gusswerkstoff bestehenden Grundwerkstoff verschmolzen ist.
Die Oberflächenschicht aus Reinstaluminium oder Edelstahl ist in einer ersten Ausführungsform als relativ dünnwandiges, aber tragfähiges Element vorgeformt und mit einem herkömmlichen Aluminium-Gusswerkstoff hintergossen. Zweitens kann die Oberflächenschicht aus Reinstaluminium oder Edelstahl aus einer auf einem Modell und/oder einem Kern zu fixierenden und dann zu hintergießenden Folie bestehen. In einer dritten Ausführungsform ist die Oberflächenschicht aus Reinstaluminium oder Edelstahl ein zu hintergießendes Tiefziehteil. Dieses ist wahlweise mit den Wärmeübergang und/oder die Strömung der Heizgase begünstigenden Elementen versehen.
Außerdem kann dass die Oberflächenschicht aus Reinstaluminium oder Edelstahl zunächst als Schlichte auf ein Modell und/oder einen Kern aufgetragen werden. Beim anschließenden Gießvorgang wird diese dann im Oberflächenbereich des Gussstückes mit dem herkömmlichen Aluminium-Gusswerkstoff verschmolzen. Mindestens die korrosionsgefährdeten Bereiche der heizgasberührten Flächen und/oder die entsprechenden Teile weisen generell eine Oberflächenschicht aus Reinstaluminium oder Edelstahl auf. Daher können die erfindungsgemäß vorgefertigten Elemente aus Reinstaluminium vor dem Abgießen auch nur in einem Teil der Form angeordnet sein.

Mit dem erfindungsgemäßen Aufbau wird ein Wärmetauscher, insbesondere für einen mit fossilen Brennstoffen befeuerten Brennwertheizkessel, geschaffen, welcher eine hohe Robustheit besitzt, parallel dazu aber auch kostengünstig zu fertigen ist. Alle Vorzüge des bekannten Aluminium-Silizium-Gusswerkstoffes bleiben beim überwiegenden Teil des Wärmetauschers erhalten. Nur die durch Heizgase oder Kondensat belasteten Bereiche werden entsprechend hochwertiger ausgeführt, wodurch auch beispielsweise die Mengen des relativ teuren Werkstoffes Reinstaluminium in diesen Zonen begrenzt werden. Vielfältige Gestaltungs- und Fertigungsmöglichkeiten für rohrförmige und flächige Bauteile bleiben erhalten.

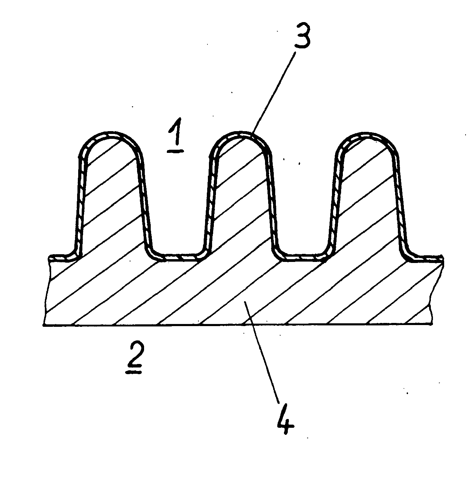

Die Zeichnung stellt ein Ausführungsbeispiel der Erfindung dar und zeigt in einer einzigen Figur die Wand eines Wärmetauschers.

Der Wärmetauscher begrenzt auf der einen Seite einen Heizgaszug 1 und auf der anderen Seite einen Wasserkanal 2. Die heizgasberührte Fläche ist mit einer Oberflächenschicht 3 aus Reinstaluminium oder Edelstahl versehen, welche mit dem aus einem herkömmlichen Aluminium-Gusswerkstoff bestehenden Grundwerkstoff 4 verschmolzen ist.

## Patentansprüche

1. Wärmetauscher, insbesondere für einen mit fossilen Brennstoffen befeuerten Brennwertheizkessel, für den Wärmeaustausch zwischen Heizgasen in mindestens einem Heizgaszug (1) und Kesselwasser in mindestens einem Wasserkanal (2), im Wesentlichen aus einem Aluminium-Gusswerkstoff ausgebildet,
**dadurch gekennzeichnet, dass** heizgasberührte Flächen und/oder Teile eine Oberflächenschicht (3) aus Reinstaluminium oder Edelstahl aufweise, welche mit dem aus einem herkömmlichen Aluminium-Gusswerkstoff bestehenden Grundwerkstoff (4) verschmolzen ist.

2. Wärmetauscher nach Anspruch 1,
**dadurch gekennzeichnet, dass** die Oberflächenschicht (3) aus Reinstaluminium oder Edelstahl vorgeformt und mit einem herkömmlichen Aluminium-Gusswerkstoff hintergossen ist.

3. Wärmetauscher nach Anspruch 1,
**dadurch gekennzeichnet, dass** die Oberflächenschicht (3) aus Reinstaluminium oder Edelstahl eine auf einem Modell und/oder einem Kern zu fixierende und zu hintergießende Folie ist.

4. Wärmetauscher nach einem der Ansprüche 1 bis 3,
**dadurch gekennzeichnet, dass** die Oberflächenschicht (3) aus Reinstaluminium oder Edelstahl ein zu hintergießendes Tiefziehteil ist, welches wahlweise mit den Wärmeübergang und/oder die Strömung der Heizgase begünstigenden Elementen versehen ist.

5. Wärmetauscher nach Anspruch 1,
**dadurch gekennzeichnet, dass** die Oberflächenschicht (3) aus Reinstaluminium oder Edelstahl zunächst als Schichte auf ein Modell und/oder einen Kem aufgetragen und beim Gießvorgang mit dem herkömmlichen Aluminium-Gusswerkstoff verschmolzen wird.

6. Wärmetauscher nach einem der Ansprüche 1 bis 5,
**dadurch gekennzeichnet, dass** mindestens die korrosionsgefährdeten Bereiche der heizgasberührten Flächen und/oder Teile eine Oberflächenschicht (3) aus Reinstaluminium oder Edelstahl aufweisen.

## Claims

1. A heat exchanger, in particular for a condensing boiler fired with fossil fuels, for heat exchange between heating gases in at least one heating gas duct (1) and boiler water in at least one water duct (2), substantially formed from aluminium cast material, **characterised in that** surfaces and/or parts in contact with heating gas have a surface layer (3) of ultrapure aluminium or stainless steel which is fused with the base material (4) consisting of a conventional aluminium cast material.

2. The heat exchanger according to claim 1, **characterised in that** the surface layer (3) of ultrapure aluminium or stainless steel is preformed and back-cast with a conventional aluminium cast material.

3. The heat exchanger according to claim 1, **characterised in that** the surface layer (3) of ultrapure aluminium or stainless steel is a film to be fixed on a pattern and/or a core and to be back-cast.

4. The heat exchanger according to one of claims 1 to 3, **characterised in that** the surface layer (3) of ultrapure aluminium or stainless steel is a deep-drawn part to be back-cast, which is provided as desired with elements promoting heat transfer and/or flow of the heating gases.

5. The heat exchanger according to claim 1, **characterised in that** the surface layer (3) of ultrapure aluminium or stainless steel is initially applied as layers to a pattern and/or a core and is fused with the conventional aluminium cast material during the casting process.

6. The heat exchanger according to one of claims 1 to 5, **characterised in that** at least the regions of surfaces and/or parts in contact with the heating gas, which are at risk of corrosion, have a surface layer (3) of ultrapure aluminium or stainless steel.

## Revendications

1. Echangeur de chaleur, en particulier pour une chaudière à condensation alimentée avec des combustibles fossiles, pour l'échange de chaleur entre des gaz de chauffage dans au moins un tronçon de gaz de chauffage (1) et de l'eau de chaudière dans au moins un canal d'eau (2), réalisée essentiellement à base d'un matériau de moulage en aluminium,
**caractérisé en ce que** des surfaces et/ou des parties en contact avec les gaz de chauffage présentent une couche de surface (3) à base d'aluminium très pur ou d'acier spécial, qui est fondu avec le matériau de départ (4) à base d'un matériau de moulage en aluminium classique.

2. Echangeur de chaleur selon la revendication 1,
**caractérisé en ce que** la couche de surface (3) à base d'aluminium très pur ou d'acier spécial est préformée et est coulée après avec un matériau de moulage en aluminium classique.

3. Echangeur de chaleur selon la revendication 1,
**caractérisé en ce que** la couche de surface (3) à base d'aluminium très pur ou d'acier spécial est une feuille à fixer et à couler après sur un modèle et/ou un noyau.

4. Echangeur de chaleur selon l'une quelconque des revendications 1 à 3,
**caractérisé en ce que** la couche de surface (3) à base d'aluminium très pur ou d'acier spécial est une pièce emboutie à couler après qui est dotée au choix avec des éléments favorisant le transfert de chaleur et/ou l'écoulement des gaz de chauffage.

5. Echangeur de chaleur selon la revendication 1,
**caractérisé en ce que** la couche de surface (3) à base d'aluminium très pur ou d'acier inoxydable est appliquée d'abord comme couche sur un modèle et/ou un noyau et est fondue lors de l'opération de coulée avec le matériau de moulage en aluminium classique.

6. Echangeur de chaleur selon l'une quelconque des revendications 1 à 5,
**caractérisé en ce qu'**au moins les zones exposées à la corrosion des surfaces et/ou parties en contact avec les gaz de chauffage présentent une couche de surface (3) à base d'aluminium très pur ou d'acier spécial.
